# EUROPÄISCHE PATENTSCHRIFT

(11) **EP 0 579 990 B1**
(45) Veröffentlichungstag und Bekanntmachung des Hinweises auf die Patenterteilung: **21.06.1995**
(21) Anmeldenummer: 93110490.5
(22) Anmeldetag: 01.07.1993
(51) Int. Cl.: C03C 11/00, C03B 19/08

(54) **Blähglas und Verfahren zu seiner Herstellung**
Foamed glass and method of preparation
Verre cellulaire et procédé de sa fabrication

(30) Priorität: 04.07.1992 DE 4222079
(43) Veröffentlichungstag der Anmeldung: 26.01.1994
(73) Patentinhaber: HERAKLITH BAUSTOFFE AG, A-9586 Fürnitz (AT)
(72) Erfinder: Ulitzsch, Fritz, D-6300 Ilmenau (DE); Zorn, Rainer, D-6325 Ilmenau (DE)
(74) Vertreter: Becker, Thomas, Dr., Dipl.-Ing.

(56) Entgegenhaltungen:
- EP-A- 0 008 218
- WO-A-82/02707
- DE-A- 2 340 852

## Beschreibung

Die vorliegende Erfindung bezieht sich auf einem Blähglaskörper mit selbsttragenden Eigenschaften, hoher mechanischer Festigkeit, Formstabilität, Druckfestigkeit und Harte und ein Verfahren zu seiner Herstellung.
Dieses Blähglas ist besonders als Schall-, Wärmedämm- und Isolationsmaterial in der Petrolchemie, im Schiffs- und Industrieofenbau sowie in Industrieanlagen, bevorzugt bei Temperaturen von 500 °C bis 850 °C, anwendbar.

Allgemein ist bekannt, daß Technologien zur Herstellung von Blähgläsern, die bis zur technischen Reife bzw. auch bis zur industriellen Produktion entwickelt wurden, folgende Merkmale aufweisen:
1. Sie benutzen als zu blähende Substanz natürliche Rohstoffe (Gesteine, Mineralien), Abfallstoffe (Altglas, Flugasche) aber auch speziell erschmolzene Gläser.
2. Sie benutzen Blähmittel, die durch Zersetzung oder auch Reaktion mit der zu blähenden Substanz im viskosen Bereich der zu blähenden Substanz Gase bilden.
   Als Blähmittel werden Ruß, Kohlenwasserstoffe, Wasserglas, Karbonate, Karbide, Nitride, Sulfate sowie natürliche Blähmittel, wie z.B. Kalk, Talk, Gips, verwandt.
3. Sie benutzen Modifizierungsmittel zur Änderung- der Oberflächenspannung und Färbung.

Diese konventionellen Blähgläser besitzen eine relativ schlechte mechanische Stabilität bei Temperaturen oberhalb des Transformationspunktes der benutzten bzw. beim Blähen entstehenden Gläser. D.h., oberhalb von etwa 500 °C läßt die Stabilität dieser Blähgläser deutlich nach. Verstärkt wird dieser Effekt durch Substanzen, welche die Blähtemperatur absenken (z.B. Wasserglas).

Solche Spezialgläser sind z.B. in der Patentschrift EP 0 008 218 A2, DE-OS 3022787 und DE-OS 32 39 793 A1 beschrieben.

Bekannt ist auch ein Spezialglas nach dem französischen Patent Reg. Nr. 85036994 für den Einsatz bei höheren Temperaturen. In diesem Spezialglas wird gezielt ein Alumosilikat erzeugt, welches das Schaumglas bei höheren Temperaturen stabilisiert. Als zu blähende Substanz wird Altglas in Verbindung mit dem Blähmittel Aluminiumnitrid (AlN) benutzt. Als nachteilig bei diesem Herstellungsverfahren ist anzusehen, daß kristalline Alumosilikate bei der Zusammensetzung üblicher Altgläser (Behälterglas, Fensterglas) nur sehr schwer in der erforderlichen Menge zu erzeugen sind. Dies ist insbesondere deshalb von Bedeutung, da bekannt ist, daß mengenmäßig kleine Anteile einer kristallinen Phase (einige %) festigkeitsminderende Eigenschaften besitzen.

Die Erfindung stellt sich daher die Aufgabe, ein Blähglas zu schaffen, das eine wesentliche Verbesserung der mechanischen Eigenschaften wie Festigkeit, Formstabilität, Druckfestigkeit und Härte bei Temperaturen oberhalb der Erweichungstemperatur konventioneller Blähgläser bis 850 °C aufweist, und ein Verfahren zu seiner Herstellung zu entwicklen.

Erfindungsgemäß wird die Aufgabe durch einem Blähglaskörper nach Anspruch 1 sowie sein Herstellungsverfahren nach Anspruch 9 gelöst. Die Unteransprüche beschreiben vorteilhafte Weiterbildungen.

Das so hergestellte Blähglas ist offenporig, bei 800 °C temperaturbeständig und weist eine Dichte von 0,15 - 0,35 g/cm³ und eine Porengröße von 1 - 3 mm auf.

Das Ausgangsgemenge hat dabei eine Zusammensetzung von z.B.
95,7 - 99,9 Masse-% Glasbruch
1 - 4 Masse-% Kalk und
0,1 - 0,3 Masse-% Titanoxid.

Der Keimbildner Titanoxid TiO₂ kann dabei auch durch Aluminiumoxid Al₂O₃ oder Zinkoxid ZnO ersetzt werden. Als Blähmittel wird vorzugsweise Kalk verwendet.

Ein beispielhaftes Verfahren sieht wie folgt aus: Glasbruch in einem Masse-Anteil von 96,0 - 99,2 Masse-% am Gesamtgemenge und mit einem Summengehalt von Fe₂O₃ und Cr₂O₃ von 0,3 - 2 Masse-% wird auf eine Mahlfeinheit von < 200 »m gemahlen, AlN in einer Menge von 0,5 - 2 Masse-% zugemischt, dieses Gemenge innerhalb von 15 Minuten von 700 °C auf 950 °C erhitzt, 60 Minuten auf dieser Temperatur gehalten, danach innerhalb von 15 Minuten auf 850 °C abgekühlt und 30 Minuten auf dieser Temperatur gehalten und abschließend in üblicher Weise auf 100 °C abgekühlt wird.
Das so hergestellte Blähglas ist geschlossenporig, bis 850 °C temperaturbeständig und weist eine Dichte von 0,15 - 0,4 g/cm³ bei einer Porengröße von 1 - 3 mm auf.

Eine Verkleinerung der Porengröße unter 1 mm wird durch ein Absenken der Blähtemperaturen von 950 auf 910 °C, verbunden mit einer Verlängerung der Blähzeit von 1 Stunde auf 2 Stunden, erreicht.

Umgekehrt wird eine Vergrößerung der Porengröße auf über > 3 mm durch eine Erhöhung der Blähtemperatur auf 980 °C, verbunden mit einer Verkürzung der Blähzeit auf 30 Minuten, erreicht.

Es wurde festgestellt, daß Gesamtgehalte von Fe₂O₃ und Cr₂O₃ im Bereich von 0,3 - 0,5 Masse-% am Masseanteil Altglas eine Porengröße von 0,1 - ¹ mm bei Dichten von 0,3 - 0,4 g/cm³ und Gesamtgehalte von Fe₂O₃ und Cr₂O₃ im Bereich von 0,5 - 2 Masse-% am Masseanteil Altglas Porengrößen von ca. 1 - 5 mm mit Dichten von 0,15 - 0,3 g/cm³ bedingen.

Die aus Flaschenaltglas hergestellten Blähgläser weisen eine stabilisierende Kristallphase von
> 25 Masse-%, Devitrit (Na₂O * 3 CaO * 6 SiO₂) und
< 5 Masse-%, Tridymit (SiO₂)
und einen Restglasanteil mit Gehalten von
8 - 12 Masse-% Na₂O
45 - 55 Masse-% SiO₂
0,1- 3 Masse-% Al₂O₃
0,1 - 2 Masse-% K₂O
0,2 - 5 Masse-% MgO und in Summe
von 0,05- 2 Masse-% Fe₂O₃ + Cr₂O₃ auf
und besitzen eine Dichte von 0,15 - 0,4 g/cm³
eine Wärmeleitfähigkeit von 0,06 - 0,1 W/m °K
eine Druckfestigkeit von 2 - 6 N/mm²
und einen linearen
Ausdehnungskoeffizienten von 7,5 - 9 * 10 ⁻⁶/°K.

Die stabilisierenden Kristallphasen bestehen aus Alkalierdalkalisilikaten, Erdalkalisilikaten und kristallinen SiO₂-Phasen. Die Kristallphasen entstehen als Entglasungen des benutzten Grundglases. Diese Phasen schmelzen weit oberhalb des Erweichungspunktes des Grundglases und verfestigen dadurch das Blähglas im Temperaturbereich zwischen der Erweichung des Grundglases und dem Kristallschmelzpunkt. Die bei dar Entglasung von kommerziellen Natron-Kalk-Gläsern entstehenden Kristallarten besitzen alle diese Eigenschaft und können somit stabilisieren. Besondere Bedeutung haben hierbei nadelförmige Kristalle, sowie davon abgeleitete Formen, wie Pinsel, Kämme, nadelförmige Sphärolite, Leisten u.ä. Als wesentlichste Komponente ist Devitrit mit der Zusammensetzung Na₂O * 3 CaO * 6 SiO₂ zu nennen. Aufgrund dieser Zusammensetzung, welche die mengenmäßig wesentlichsten Bestandteile der Natron-Kalk-Gläser enthält, kann Devitrit prinzipiell in größeren Mengen entstehen. Anteile von 30 Massse-% im kristallisierten Blähglas und höher (je nach CaO-Gehalt als begrenzende Größe bei konventionellen Natron-Kalk-Gläsern) sind gängige Werte.

Rein visuell erscheint der Anteil im Mikroskop unter polarisiertem Licht noch viel höher. Hier wird auch die Wirkungsweise der Stabilisierung deutlich. Die entstehenden nadelförmigen Kristalle wachsen in der Glasmatrix, durchdringen sich, behindern sich gegenseitig im Wachstum und bilden einen Kristallfilz, der ein tragendes Skelett bildet. In den Skelettzwischenräumen befindet sich das an Devitritkomponenten verarmte Restglas. Bei konventionellen Altgläsern ist dieses Restglas ein relativ SiO₂-reiches, Na₂O-haltiges Glas.
Bei höheren CaO-Gehalten können β-Wollastonit (CaO * SiO₂) und auch Gemische von β-Wollastonit und Devitrit die Stabilisierungsaufgabe übernehmen.

Beispielhaft sei an dieser Stelle der Einfluß der Glaszusammensetzung auf die Stabilisierung erläutert:
Es wird von folgender Glaszusammensetzung in Masseprozent ausgegangen:
12,9 % Na₂O, 8,6 % CaO, 71,0 % SiO₂, 1,0 % K₂O, 3,4 % MgO, 2,2 % Al₂O₃, 0,4 % Fe₂O₃, 0,4 % Cr₂O₃, 0,1 % SO₃.

Devitrit hat in Masseprozent folgende Zusammensetzung:
10,5 % Na₂O, 28,5 % CaO, 61,0 % SiO₂.

Damit können bei vollständigem Verbrauch an CaO im kristallisierten Blähglas 30 Masse-% Devitrit entstehen. Aufgrund der verwendeten Glaszusammensetzung befindet man sich in unmittelbarer Nähe des Bildungsgebietes von Devitrit bei einem reinen Natron- Kalk- ,CaO-Dreikomponentenglas. Der Bildungstemperaturbereich liegt zwischen 800 und 1000 °C.

Somit kann man durch gezielte Auswahl der Gläser in der Nähe oder im Bildungsgebiet von Devitrit und durch ein Temperregime im Bildungstemperaturbereich von Devitrit die Devitritbildung gezielt fördern und damit den gewünschten Stabilisierungseffekt erreichen. MgO-Anteile < 5 Masse-% sind zulässig, wirken sich aber ungünstig auf die Kristallisationsneigung aus. Hohe Na₂O-Anteile begünstigen zwar die Kristallisationsneigung, erzeugen aber ein Na₂O-reiches Restglas mit vergleichsweise geringen Devitritgehalten und damit geringerer Temperaturstabilität. Ein hoher CaO-Gehalt (bis 15 Masse-%) gestattet die Erzeugung eines temperaturbeständigeren Blähglases, erfordert aber längere Temperzeiten und höhere Tempertemperaturen.

Ein weiteres Problem ist die Schaffung von Kristallisationskeimen in genügend großer Menge. Durch Führung des Temperregimes zunächst in das Gebiet der maximalen Keimbildungsgeschwindigkeit wird dafür eine Grundvoraussetzung geschaffen. Bei konventionellen Natron-Kalk-Gläsern liegt dieses Gebiet zwischen 700 und 850 °C.

Durch Schaffung von Zusatzkeimen wird dieser Prozeß beschleunigt. Diese Fremdkeime sind für eine ausreichende Kristallisation innerhalb einer akzeptablen Temperzeit zwingend notwendig. Zur Erzeugnung dieser Fremdkeime gibt es zwei einfache Möglichkeiten:
a) Zersetzungsrelikte des Blähmittels
b) relativ inerte Zusatzstoffe.

a) Hierunter fallen Blähmittel, deren Zersetzungsprodukte mineralische Oxide liefern. Besonders geeigent sind Blähmittel, die als Zersetzungsprodukt CaO liefern (Blähmittel Kalk). Dies hat den Vorteil, daß auf diese Weise der CaO-Gehalt erhöht und damit die Devitrit-Bilanz verbessert wird. Auch Al₂O₃ erweist sich als recht günstig, obwohl das Al₂O₃ nicht in das Devitrit eingebaut wird und nur als Fremdkeim wirkt. Beispielsweise entsteht Al₂O₃ als Zersetzungsprodukt des Blähmittels AlN. Nicht geeigent sind Kohlenstoffträger (Ruß, Kohlenwasserstoffe), aber auch SiC zeigt kaum Kristallisationseffekte. Natronwasserglas kann als Blähmittel eingesetzt werden, erhöht aber den Alkalienanteil und verschlechtert so die Temperaturfestigkeit des Restglases, auch wenn die Kristallisationsneigung günstig beeinflußt wird.
b) Als inerte Zusatzstoffe kommen eine Vielzahl von Oxiden in Betracht. Aus Verarbeitungsgründen sollten sie nicht hygroskopisch sein. Beispielsweise sind Al₂O₃ und TiO₂ als geeignete Fremdkeime zu nennen.

Die Erfindung wird anhand nachfolgender Ausführungsbeispiele näher dargestellt.

Es wurde ein Gemenge aus
97,8 Masse-% Glasbruch
2,0 Masse-% Kalk
0,2 Masse-% Titandioxid
durch gemeinsames Aufmahlen hergestgellt. Verwendet wurde die Kornfraktion zwischen 10 »m und 200 »m.
Der Blähglasblock wurde nach folgendem Temperaturregime hergestellt:
Start bei 750 °C. Diese Temperatur wurde 15 Minuten gehalten und danach innerhalb 5 Minuten auf 830 °C erhöht. Diese Temperatur wurde 30 Minuten gehalten, dann in 10 Minuten auf 800 °C abgekühlt und diese Temperatur wieder 30 Minuten gehalten. Danach wurde in üblicher Weise abgekühlt.
Das entstandene Blähglas war offenporig und bis 800 °C temperaturbeständig. Die Dichte betrug etwa 0,2 g/cm³.

Es wurde ein Gemenge aus
99 Masse-% grünem Glasbruch
und
1 Masse-% AlN
durch gemeinsames Aufmahlen hergestellt. Der Gesamteisen- und Chromgehalt betrug 0,7 Masse-%, um eine Dichte von 0,2 g/cm³ zu erreichen.
Der Blähglasblock wurde nach folgendem Temperaturregime hergestellt:
Start bei 700 °C. Danach die Temperatur innerhalb von 15 Minuten auf 950 °C erhöht, 60 Minuten auf 950 °C gehalten, in 15 Minuten auf 850 °C abgekühlt und 30 Minuten auf dieser Temperatur gehalten, danach in überlicher Weise abgekühlt.

Das entstandene Schaumglas war geschlossenporig und bis 850 °C temperaturbeständig. Die Dichte betrug etwa 0,2g/cm³.

## Patentansprüche

1. Blähglaskörper, bestehend aus einem kristallinen Skelett aus Alkalierdalkalisilikaten und/oder Erdalkalisilikaten mit einem Devitrit- beziehungsweise Devitrit- und β-Wollastonitanteil von > 25 Masse-%, bezogen auf den Gesamtkörper, und einer, in den Skelettzwischenräumen ausgebildeten Glasmatrix.

2. Blähglaskörper nach Anspruch 1 mit einer Dichte zwischen 0,15 und 0,4 g/cm³.

3. Blähglaskörper nach Anspruch 1 oder 2 mit einer Wärmeleitfähigkeit von 0,06 bis 0,1 W/mK.

4. Blähglaskörper nach einem der Ansprüche 1 bis 3 mit einer Druckfestigkeit zwischen 2 und 6 N/mm².

5. Blähglaskörper nach einem der Ansprüche 1 bis 4 mit einem linearen Ausdehnungskoeffizienten zwischen 7,5 und 9 x 10⁻⁶/K.

6. Blähglaskörper nach einem der Ansprüche 1 bis 6, bei dem die Glasmatrix aus
8 - 12 Masse-% Na₂O
45 - 55 Masse-% SiO₂
0,1 - 3 Masse-% Al₂O₃
0,1 - 2 Masse-% K₂0
0,2 - 5 Masse-% MgO
0,05 - 2 Masse-% Fe₂0₃ + Cr₂0₃
bezogen auf den Gesamtkörper, besteht.

7. Blähglaskörper nach einem der Ansprüche 1 bis 6 mit einer offenporigen Struktur.

8. Blähglaskörper nach einem der Ansprüche 1 bis 7 mit einer Porengröße zwischen 1 und 3 mm.

9. Verfahren zur Herstellung eines Blähglaskörpers aus zerkleinertem Altglasbruch unter Zusatz von einem Blähmittel und Verschäumen bei erhöhter Temperatur zu Blöcken und Platten nach einem der Ansprüche 1 bis 8, dadurch gekennzeichnet, daß dem Gemenge aus aufgemahlenem Altglasbruch und Blähmittel ein Kristallkeimbildner zugesetzt wird.

10. Verfahren nach Anspruch 9, dadurch gekennzeichnet, daß als Kristallkeimbildner TiO₂, Al₂O₃ oder ZnO dem Gemenge zugesetzt wird.

11. Verfahren nach einem der Ansprüche 9 oder 10, dadurch gekennzeichnet, daß vor dem Verschäumen des Gemenges eine Temperaturhaltephase im Bereich der maximalen Keimbildungsgeschwindigkeit eingelegt wird.

12. Verfahren nach einem der Ansprüche 9 bis 11, dadurch gekennzeichnet, daß nach dem Verschäumen des Gemenges eine Temperaturhaltephase im Bereich der maximalen Kristallwachstumsgeschwindigkeit eingelegt wird.

13. Verfahren nach einem der Ansprüche 9 bis 12, dadurch gekennzeichnet, daß 96 bis 99 Masse-% Glasbruch gemahlen, die Kornfraktion unter 10 »m und über 200 »m abgetrennt und die verbleibenden Fraktionen von 10 »m bis 200 »m mit Blähmittel, vorzugsweise 1 bis 4 Masse-% Kalk und einem Kristallkeimbildner, vorzugsweise 0,1 bis 0,3 Masse-% TiO₂, mit der Maßgabe, daß die Summe aller Bestandteile 100 Masse-% beträgt, gemischt, anschließend dieses Gemenge auf eine Temperatur von 750° C erhitzt, danach 15 Minuten auf dieser Temperatur gehalten, in nachfolgenden 5 Minuten die Temperatur auf 830° C erhöht und auf dieser Temperatur 30 Minuten gehalten und abschließend in einer Zeit von 10 Minuten auf 800° C abgekühlt und auf dieser Temperatur 30 Minuten gehalten wird und ein so erhaltener Blähglasblock in üblicher Weise auf etwa 100° C weiter abgekühlt wird.

14. Verfahren nach einem der Ansprüche 9 bis 13, dadurch gekennzeichnet, daß der Glasbruch folgende Zusammensetzung besitzt:
| | |
|---|---|
| SiO₂ | 65 - 75 Masse-% |
| CaO | 7 - 15 Masse-% |
| Na₂O | 8 - 18 Masse-% |
| MgO | < 5 Masse-% |
| Al₂O₃ | < 4 Masse-% |
| K₂O | < 3 Masse-% |
| Fe₂O₃ + Cr₂O₃ | < 2 Masse-% |
mit der Maßgabe, daß die Summe aller Bestandteile 100 Masse-% beträgt.

15. Verfahren nach einem der Ansprüche 9 bis 14, dadurch gekennzeichnet, daß Glasbruch in einem Anteil von 96,0 bis 99,2 Masse-% am Gesamtgemenge und mit einem Summengehalt von Fe₂O₃ und Cr₂O₃ von 0,3 bis 2 Masse-% auf eine Mahlfeinheit von < 200 »m gemahlen, AlN in einer Menge von 0,5 bis 2 Masse-%, mit der Maßgabe, daß die Summe aller Bestandteile 100 Masse-% beträgt, zugemischt wird und dieses Gemenge innerhalb von 15 Minuten von 700° C auf 950° C erhitzt, 60 Minuten auf dieser Temperatur gehalten, danach innerhalb von 15 Minuten auf 850° C abgekühlt und 30 Minuten auf dieser Temperatur gehalten und abschließend in üblicher Weise auf 100° C gekühlt wird.

16. Verfahren nach einem der Ansprüche 9 bis 15, dadurch gekennzeichnet, daß ein Glasbruch mit folgender Zusammensetzung verwendet wird:
| | |
|---|---|
| SiO₂ | 65 - 75 Masse-% |
| CaO | 7 - 15 Masse-% |
| Na₂O | 8 - 18 Masse-% |
| MgO | < 5 Masse-% |
| Al₂O₃ | < 4 Masse-% |
| K₂O | < 3 Masse-% |
| Fe₂O₃ + Cr₂O₃ | 0,3- 2 Masse-% |
mit der Maßgabe, daß die Summe aller Bestandteile 100 Masse-% beträgt.

17. Verfahren nach einem der Ansprüche 14 bis 16, dadurch gekennzeichnet, daß je Mol Fe₂O₃ + Cr₂O₃ dem Ausgangsglasgemenge 0,5 bis 0,6 Mol AlN zugemischt werden.

## Claims

1. A foamed glass body consisting of a crystalline skeleton of alkali alkaline earth silicates and/or alkaline earth silicates having a portion of devitrite, or devitrite and b-wollastonite, respectively, of > 25% by weight based on the whole body, and a glass matrix formed within the voids of the skeleton.

2. A foamed glass body according to claim 1 having a density between 0,15 and 0,4 g/cm³.

3. A foamed glass body according to claim 1 or 2 having a thermal conductivity of 0,06 to 0,1 W/mK.

4. A foamed glass body according to any of claims 1 to 3 having a compressive strength between 2 and 6 N/mm².

5. A foamed glass body according to any of claims 1 to 4 having a coefficient of linear expansion between 7,5 and 9 x 10⁻⁶/K.

6. A foamed glass body according to any of claims 1 to 6, wherein the glass matrix consists of
8 - 12% by weight Na₂O
45 - 55% by weight SiO₂
0,1 - 3% by weight Al₂O₃
0,1 - 2% by weight K₂O
0,2 - 5% by weight MgO
0,05 - 2% by weight Fe₂O₃ + Cr₂O₃
based on the whole body.

7. A foamed glass body according to any of claims 1 to 6 having a structure with open pores.

8. A foamed glass body according to any of claims 1 to 7 having a pore size between 1 and 3 mm.

9. A method of preparation of a foamed glass body from crushed cullet with adding of a blowing agent and foaming, at elevated temperature, into blocks and plates according to any of claims 1 to 8, characterized in that a seeding agent is added to the batch of ground cullet and blowing agent.

10. A method according to claim 9, characterized in that TiO₂, Al₂O₃ or ZnO, as seeding agent, is added to the batch.

11. A method according to any of claims 9 or 10, characterized in that a period of holding the temperature is put in before foaming of the batch, in the region of the maximum crystal growth rate.

12. A method according to any of claims 9 to 11, characterized in that a period of holding the temperature is put in after foaming of the batch, in the region of the maximum crystal growth rate.

13. A method according to any of claims 9 to 12, characterized in that 96 to 99% by weight of cullet are ground, the fractions of grain sizes under 10 »m and over 200 »m are separated and the remaining fractions of 10 »m to 200 »m are mixed with a blowing agent, preferably 1 to 4% by weight of lime, and a seeding agent, preferably 0,1 to 0,3% by weight of TiO₂, on the condition that the total of all components is 100% by weight, after that this batch is heated to a temperature of 750°C, then held at this temperature for 15 minutes, within the following 5 minutes the temperature is raised to 830°C, and held at this temperature for 30 minutes, and finally within a period of 10 minutes cooled to 800°C and held at this temperature for 30 minutes, and a so obtained foamed glass block is cooled further to about 100°C in the usual manner.

14. A method according to any of claims 9 to 13, characterized in that the cullet has the following composition:
| | |
|---|---|
| SiO₂ | 65 - 75 % by weight |
| CaO | 7 - 15 % by weight |
| Na₂O | 8 - 18 % by weight |
| MgO | < 5 % by weight |
| Al₂O₃ | < 4 % by weight |
| K₂O | < 3 % by weight |
| Fe₂O₃ + Cr₂O₃ | < 2 % by weight |
on the condition that the total of all components is 100% by weight.

15. A method according to any of claims 9 to 14, characterized in that the cullet in a portion of 96,0 to 99,2% by weight of the total batch and with a total content of Fe₂O₃ and Cr₂O₃ of 0,3 to 2% by weight is ground to a fineness of grind of < 200 »m, AlN is admixed in an amount of 0,5 to 2% by weight, on the condition that the total of all components is 100% by weight, and this batch is heated from 700°C to 950°C within 15 minutes, held on this temperture for 60 minutes, then cooled to 850°C within 15 minutes and held on this temperature for 30 minutes and finally cooled to 100°C in the usual manner.

16. A method according to any of claims 9 to 15, characterized in that a culled is used having the following composition:
| | |
|---|---|
| SiO₂ | 65 - 75 % by weight |
| Cao | 7 - 15 % by weight |
| Na₂O | 8 - 18 % by weight |
| MgO | < 5 % by weight |
| Al₂O₃ | < 4 % by weight |
| K₂O | < 3 % by weight |
| Fe₂O₃ + Cr₂O₃ | 0,3 - 2 % by weight |
on the condition that the total of all components is 100% by weight.

17. A method according to any of claims 14 to 16, characterized in that 0,5 to 0,6 mole AlN per mole Fe₂O₃ + Cr₂O₃ are admixed to the starting glass batch.

## Revendications

1. Corps en verre cellulaire, composé d'un squelette cristallin en silicates d' alcalins alcalino-terreux et/ou de silicates d'alcalino-terreux avec une proportion de dévidrite, respectivement de dévidrite et de β-Wollastonite d'une teneur supérieure à 25 % en masse, par rapport au corps d'ensemble, et une matrice de verre réalisée dans les espaces intermédiaires du squelette.

2. Corps en verre cellulaire selon la revendication 1, d'une densité comprise entre 0,15 et 0,4 g/cm³.

3. Corps en verre cellulaire selon la revendication 1 ou 2, ayant une conductibilité thermique de 0,06 à 0,1 W/m°K.

4. Corps en verre cellulaire selon l'une des revendications 1 à 3, ayant une résistance en compression comprise entre 2 et 6 N/mm².

5. Corps en verre cellulaire selon l'une des revendications 1 à 4, ayant un coefficient de dilatation linéaire compris entre 7,5 et 9 x 10⁻⁶/°K.

6. Corps en verre cellulaire selon l'une des revendications 1 à 6, dans lequel la matrice de verre est constituée de
8 à 12 % en masse de Na₂O
45 à 55 % en masse de SiO₂
0,1 à 3 % en masse de Al₂O₃
0,1 à 2 % en masse de K₂O
0,2 à 5 % en masse de MgO
0,05 à 2 % en masse de Fe₂O₃ + Cr₂O₃,
par rapport au corps d'ensemble.

7. Corps en verre cellulaire selon l'une des revendications 1 à 6, ayant une structure à porosité ouverte.

8. Corps en verre cellulaire selon l'une des revendications 1 à 7, ayant une taille de pores comprise entre 1 et 3 mm.

9. Procédé de fabrication d'un corps en verre cellulaire à partir de brisures broyées de vieux verre avec apport d'un agent gonflant et pré-moussage à température élevée, pour constituer des blocs et des plaques selon l'une des revendications 1 à 8, caractérisé en ce qu'à la quantité de brisures de vieux verre moulu et d'agent gonflant est ajouté un formateur de germes cristallins.

10. Procédé selon la revendication 9, caractérisé en ce qu'on ajoute à la quantité de produit comme formateur de germes cristallins TiO₂, Al₂O₃ ou ZnO.

11. Procédé selon l'une des revendications 9 ou 10, caractérisé en ce qu'avant moussage de la quantité on établit une phase de maintien de température dans la plage de la vitesse maximale de formation des germes.

12. Procédé selon l'une des revendications 9 à 11, caractérisé en ce qu'après moussage de la quantité on établit une phase de maintien de température dans la plage de la vitesse maximale de croissance cristalline.

13. Procédé selon l'une des revendications 9 à 12, caractérisé en ce qu'on broie de 96 à 99 %, en masse de brisures de verre, on sépare la fraction granulaire inférieure à 10 »m et supérieure à 200 »m et l'on mélange les fractions restantes, comprises entre 10 »m et 200 »m, avec un agent gonflant, de préférence de 1 à 4 % en masse de chaux et avec un formateur de germes cristallins, de préférence de 0,1 à 0,3 % en masse de TiO₂ sous la condition que la somme de tous les composants fasse 100 % en masse, puis on chauffe cette quantité à une température de 750 °C, puis l'on maintient 15 minutes à cette température, on augmente la température jusqu'à 830 °C pendant les 5 minutes qui suivent et l'on maintient à cette température pendant 30 minutes, puis l'on refroidit à une température de 800 °C sur une durée de 10 minutes et l'on maintient à cette température pendant 30 minutes et l'on refroidit encore un bloc de verra cellulaire ainsi obtenu, de manière usuelle, jusqu'à atteindre une température d'à peu près 100 °C.

14. Procédé selon l'une des revendications 9 à 13, caractérisé en ce que les brisures de verre ont la composition ci-après :
| | |
|---|---|
| SiO2 | 65 à 75 % en masse |
| CaO | 7 à 15 % en masse |
| Na₂O | 8 à 18 % en masse |
| MgO | < 5 % en masse |
| Al₂O₃ | < 4 % en masse |
| K₂O | < 3 % en masse |
| Fe₂O₃ + Cr₂O₃ | < 2 % en masse |
sous la condition que la somme de tous les composants fasse 100 % en masse.

15. Procédé selon l'une des revendications 9 à 14, caractérisé en ce que les brisures de verre sont moulues en une proportion de 96,0 à 99,2 % en masse de la quantité totale et avec une teneur d'appoint de Fe₂O₃ et de Cr₂O₃ de 0,3 à 2 % en masse, la mouture visant à atteindre une finesse < 200 »m, on ajoute par mélange AlN en une quantité de 0,5 à 2 % en masse, sous la condition que la somme de tous les composants fasse 100 % en masse, et l'on chauffe ce mélange pendant 15 minutes faisant passer la température de 700 °C à 950 °C, on maintient 60 minutes à cette température, puis l'on refroidit pendant 15 minutes à 850 °C et l'on maintient 30 minutes à cette température et l'on refroidit de manière usuelle, jusqu'à atteindre une température de 100 °C.

16. Procédé selon l'une des revendications 9 à 15, caractérisé en ce qu'on l'utilise des brisures de verre de composition ci-après :
| | |
|---|---|
| SiO2 | 65 à 75 % en masse |
| CaO | 7 à 15 % en masse |
| Na₂O | 8 à 18 % en masse |
| MgO | < 5 % en masse |
| Al₂O₃ | < 4 % en masse |
| K₂O | < 3 % en masse |
| Fe₂O₃ + Cr₂O₃ | 0,3 à 2 % en masse |
sous la condition que la somme de tous les composants fasse 100 % en masse.

17. Procédé selon l'une des revendications 14 à 16, caractérisé en ce que l'on ajoute par mélange pour chaque mole de Fe₂O₃ + Cr₂O₃ à la quantité de verre initiale de 0,5 à 0,6 mol de AlN.
